# EUROPEAN PATENT APPLICATION

(11) **EP 4 275 884 A1**
(43) Date of publication of application: **15.11.2023**
(21) Application number: 23171210.0
(22) Date of filing: 03.05.2023
(51) Int. Cl.: B32B 15/04, B32B 3/06, B32B 3/08, B32B 5/20, B32B 15/14, E04C 2/292, F16B 5/00

(54) **FIREPROOF SANDWICH-STRUCTURED COMPOSITE PANEL AND METHOD FOR MANUFACTURING THEREOF**

(30) Priority: 10.05.2022 FI 20225405
(71) Applicant: Rautaruukki Oyj, 00620 Helsinki (FI)
(72) Inventor: JANIK, Oskar, 00620 Helsinki (FI); HEIKKILÄ, Simo, 00620 Helsinki (FI)
(74) Representative: Papula Oy

(57) **Abstract**

A fireproof sandwich-structured composite panel (1), and a method for manufacturing thereof. The fireproof sandwich-structured composite panel comprises a first face skin (3), a second face skin (4), and a core (5) made of thermally insulating material arranged between the first face skin and the second face skin. An attachment edge (2) is arranged at the edge of the composite panel (1) for attaching the composite panel to another composite panel (1). The attachment edge (2) comprises two attachment profiles (6) shaped for a tongue-and-groove attachment, an open section (7) between the attachment profiles (6) open to the core (5), and a non-combustible layer (11) arranged in said open section and filling thereof. The non-combustible layer (11) is narrower than the core (5).

## Description

### BACKGROUND

The invention relates to a fireproof sandwich-structured composite panel.

The invention further relates to a method for manufacturing a fireproof sandwich-structured composite panel.

Sandwich panels are commonly used in exterior or interior walls or ceilings of the buildings, also for such applications where certain fire resistance is required. Regarding fire resistance, joints between panels are typically the most critical part of the panel structure.

### BRIEF DESCRIPTION

Viewed from a first aspect, there can be provided a fireproof sandwich-structured composite panel, comprising a first face skin of sheet metal, a second face skin of sheet metal, and a core made of thermally insulating material arranged between the first face skin and the second face skin, an attachment edge at the edge of the composite panel for attaching the composite panel to another composite panel, the attachment edge comprising two attachment profiles shaped for a tongue-and-groove attachment, an open section between the attachment profiles open to the core, and a non-combustible layer arranged in said open section and filling thereof, wherein said non-combustible layer is narrower than the core.

Thereby the fire resistance of structures made of the fireproof sandwich-structured composite panels may be improved in the most critical part of the structure, i.e. panel joints. The narrower non-combustible layer allows the material of the core to extend to very end of the panel, and thus the thermal insulation properties of the panel may be maintained while the fire properties are improved.

Viewed from a further aspect, there can be provided a method for manufacturing a composite panel, the method comprising steps of:
- providing a first face skin of sheet metal and a second face skin of sheet metal,
- arranging the first face skin and the second face skin parallel,
- forming an attachment profile in an edge of the first face skin and another attachment profile in an edge of the second face skin, and shaping the attachment profiles for a tongue-and-groove attachment,
   arranging the attachment profiles side by side so that there is an open section between the attachment profiles,
- arranging material(s) for a thermally insulating core in a flowable form between the first face skin and the second face skin,
- closing the open section between the attachment profiles with a strip comprising non-combustible layer, wherein the non-combustible layer is narrower than the distance between the first face skin and the second face skin, and
- allowing the material of the thermally insulating core to expand into contact with the first face skin and the second face skin.

Thereby a method for producing fireproof sandwich-structured composite panels which has a high fire resistance abilities and good thermal insulation properties may be achieved.

The arrangement and the method are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In one embodiment, the open section extends from a first of said two attachment profiles to another of said two attachment profiles.

An advantage is that the fire performance, such as fire integrity and fire insulation, of the joint area of the panels may be enhanced.

In one embodiment, the first attachment profile is formed from a sheet metal forming the first face skin and the second attachment profile is formed from a sheet metal forming the second face skin.

An advantage is that the structure of the attachment edge is very simple.

In one embodiment, the composite panel comprises attachment edges at opposite edges thereof, such that said attachment edges are counterparts to each other.

An advantage is that structure comprising multiple of such panels may be easily constructed.

In one embodiment, the core is of foamed polyurethane (PUR).

An advantage is that panels having high thermal insulation properties may be achieved.

In one embodiment, the core is of foamed polyisocyanurate (PIR) .

An advantage is that panels having high thermal insulation properties while having good fire behaviour may be achieved.

In one embodiment, the non-combustible layer comprises a layer of fibrous or porous material, such as mineral wool layer.

An advantage is that also good thermal insulation properties the joint area of the panels may be achieved.

In one embodiment, the composite panel comprises a sealing layer arranged between the non-combustible layer and the thermally insulating core.

An advantage is that the inner side of the composite panel is sealed, and potential leaking of materials therefrom may be avoided or at least essentially restricted.

In one embodiment, the non-combustible layer is of mineral wool strip comprising a facing layer, such as aluminum foil, said facing layer arranged to constitute said sealing layer.

An advantage is that a smooth, continuous production process may be enabled and required method steps may be reduced.

In one embodiment, the composite panel comprises a seal component arranged in at least one of the two attachment profiles, preferably in the groove-profile.

An advantage is that the seal component makes the product applicable also for exterior walls applications due to a proper air tightness of the panel structure.

In one embodiment, the method comprises applying a primer material on the inner surface of at least one of the face skins for improving adhesion of the material of the thermally insulating core to said at least one face skin.

An advantage is that a proper bonding of the material(s) creating foamed core may be ensured.

In one embodiment, the method comprises closing the open section with a mineral wool strip comprising a facing layer, and arranging said facing layer towards the core, creating thus a sealing layer.

An advantage is that installing of the sealing layer may be simple and quick.

### BRIEF DESCRIPTION OF FIGURES

Some embodiments illustrating the present disclosure are described in more detail in the attached drawings, in which
Figure 1 is a schematic cross-sectional view of attachment edges of two composite panels, and
Figure 2 illustrates schematic views of a method for manufacturing a composite panel.

In the figures, some embodiments are shown simplified for the sake of clarity. Similar parts are marked with the same reference numbers in the figures.

### DETAILED DESCRIPTION

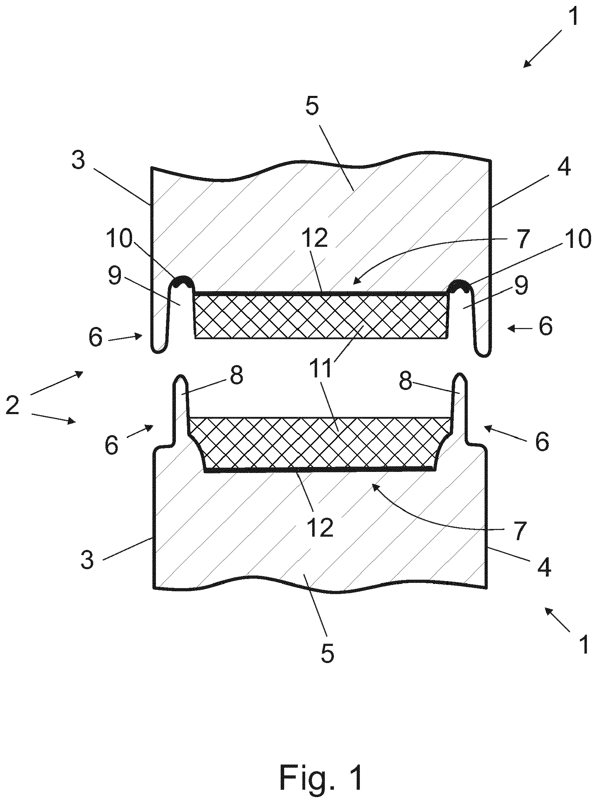

**Figure 1** is a schematic cross-sectional view of attachment edges of two fireproof sandwich-structured composite panels. The composite panel 1 is a self-supporting, double skin metal faced insulating sandwich panel that may be used as a façade cladding panel element, a partition wall panel element, or a ceiling panel element, for instance. In an embodiment, the thickness of the composite panel 1 is in range of 60 mm - 250 mm.

In an embodiment, the term "Fireproofness" means an improved performance against fire exposure, usually expressed in terms of fire integrity and fire insulation performance of the structure.

The composite panel 1 comprises a first face skin 3 and a second face skin 4, both of sheet metal. A core 5 made of thermally insulating material is arranged between the first face skin 3 and the second face skin 4.

In an embodiment, the material of the face skin 3, 4 comprises steel, such as metal or colour coated steel or stainless steel, or uncoated steel or stainless steel.

In an embodiment, the core 5 is of foamed polyurethane (PUR). In another embodiment, the core 5 is of foamed polyisocyanurate (PIR). In an embodiment, the core 5 is of expanded polystyrene or extruded polystyrene foam. In an embodiment, the core 5 is of phenolic foam.

The attachment edge 2 is arranged at the edge of the composite panel 1 for attaching the composite panel to another composite panel 1. In the attachment edge 2 there are two attachment profiles 6 that are shaped for creating a tongue-and-groove attachment between the attached panels.

In an embodiment, such as shown in Figure 1, the first attachment profile 6 is formed from the first face skin 3 and the second attachment profile 6 is formed from the second face skin 4.

In an embodiment, such as shown in Figure 1, both of the two attachment profiles 6 arranged in the same attachment edge 2 comprise a tongue-profile 8 (such as in the lower attachment edge 2 shown in Figure 1) or a groove-profile 9 (such as in the upper attachment edge 2 shown in Figure 1). In another embodiment, one of the two attachment profiles 6 arranged in the same attachment edge 2 comprises a tongue-profile 8 whereas another attachment profile 6 in said attachment edge 2 comprises a groove-profile 9.

Preferably, there are attachment edges 2 at two edges of the composite panel 1 such that said attachment edges 2 are counterparts to each other.

The attachment edge 2 comprises an open section 7 between the attachment profiles 6 open to the core 5. In an embodiment, this means that the metal sheets of the face skins 3, 4 do not overlap or abut but instead, abut to the open section 7. Thus, the open section 7 is narrower than the core 5. In an embodiment, the width of the open section 7 is selected in range of 20 mm - 230 mm.

In embodiments where the composite panel 1 comprises attachment edges at opposite edges thereof, there may be an open section 7 in just one of said ends, or alternatively, in both of said ends. If in both ends, the width of the open sections may be similar in said both ends, or alternatively, the widths of the open sections may be unequal.

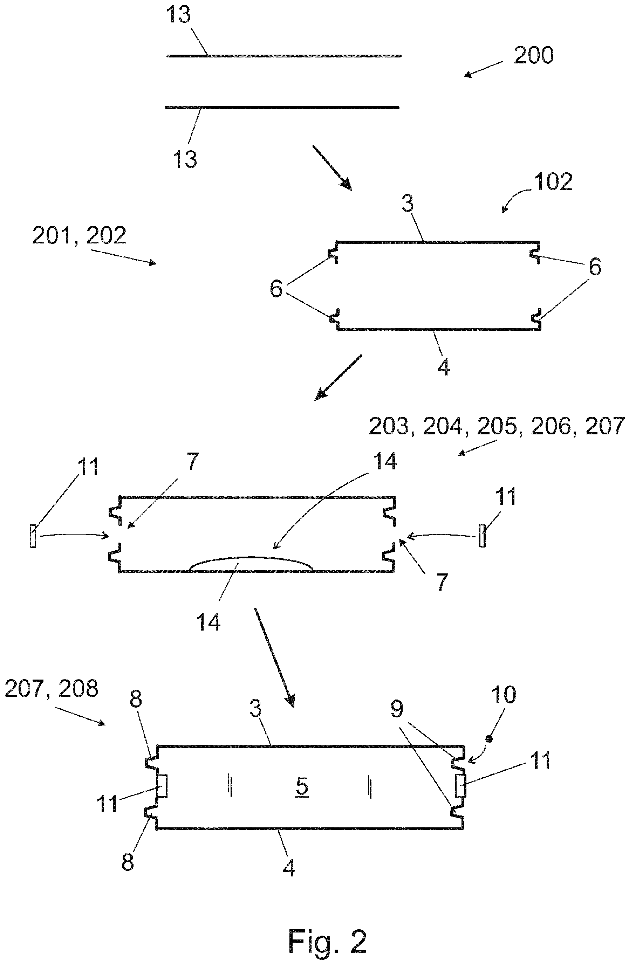

In an embodiment, the open section 7 extends from a first of said two attachment profiles 6 to another of said two attachment profiles 6. In another embodiment, such as shown in Figure 2, the open section 7 is narrower than the distance between said two attachment profiles 6.

The open section 7 is filled with a non-combustible layer 11 that is narrower than the core 5. The non-combustible layer 11 improves fire integrity and fire insulation in the joint. Said "fire integrity" means ability to stop fire or fire gasses passing from one side of the panel to another. Said "fire insulation" means that temperature does not increase too much on the unexposed side.

As the layer 11 is narrower than the core 5, the material of the core may extend to very end of the panel, even inside the shapes of the attachment profile that form the tongue-profile and the groove-profile. Thus, the thermal insulation properties are good also in joints between the panels.

In an embodiment, the non-combustible layer 11 comprises a layer of fibrous or porous material. In an embodiment, the non-combustible layer is of thermal insulation material, such as mineral wool or stone wool.

In an embodiment, there is a sealing layer 12 arranged between the non-combustible layer 11 and the thermally insulating core 5. The sealing layer 12 is impermeable or at least essentially impermeable to flowable material(s) that are arranged between the first and the second face skins 3, 4 and are allowed to expand and create the thermally insulating core 5.

In an embodiment, the sealing layer 12 is a metal foil or sheet. In an embodiment, the sealing layer 12 is an aluminium foil. The metal foil or sheet, such as aluminium foil, is good in that it is non-flammable material, and thus does not produce more fire load.

In an embodiment, the non-combustible layer 11 is of mineral wool or stone wool strip that has a facing layer. Said strip is arranged in the open section 7 so that the facing layer is towards the insulating core 5, constituting thus the sealing layer 12. The facing layer is typically an aluminum foil. In an embodiment, the non-combustible layer 11 is of mineral-wool strip having thickness approximately 10 mm - 100 mm, preferably 20 mm - 40 mm and having density in range of 30 - 50 kg/m³.

In an embodiment, the composite panel 1 comprises a seal component 10 that is arranged in the attachment profile. The seal component 10 may prevent condensation of water in the joint area and following worsening of thermal properties of the panels. Thus, the seal component may make the panels suitable for using as external walls where water vapor may be present. Additionally in some fire situations, the seal component may prevent fire gasses from passing from the fire side to the unexposed side and for some period of time. The seal component in the groove-profile is well-protected prior to attachment to another panel.

In an embodiment, the seal component 10 is arranged in the groove-profile 9. In an embodiment, such as shown in Figure 1, the seal component 10 is arranged in both of the two attachment profiles 6 in the very same attachment edge 2. The seal component 10 is preferably of elastic material that shapes itself into a room between profiles attached together. In an embodiment, the seal component 10 is airtight in an extent that it prevents airflow into the panel structure. In an embodiment, the seal component 10 is made of elastomer or rubber.

**Figure 2** illustrates schematic views of a method for manufacturing a composite panel.

In the method it is provided 200 metal sheets 13 from which a first face skin 3 and a second face skin 4 are formed. Typically, the metal sheets 13 are rolled out from rolled metal coils.

The metal sheets 13 or the face skins 3, 4 are arranged 201 parallel, and attachment profiles 6 are formed 202 in at least one edge of the first face skin 3, typically in both ends, and the second face skin 4 into a shape of a tongue-and-groove attachment. The forming may be done e.g. by edging methods.

The face skins 3, 4 and the attachment profiles 6 formed therein are arranged 203 side by side so that there is an open section 7 between the attachment profiles 6.

Material(s) 14 that form(s) the thermally insulating core 5 are dispended 204 in a flowable form between the face skins 3, 4. These materials may comprise e.g. di-isocyanate and polyol for creating a PIR core or a PUR core.

In an embodiment of the method where the core is made of PIR, at least one primer material is applied 207 on the inner surface of at least one of the face skins 3, 4 prior to material(s) 14 forming the thermally insulating core 5. Typically, the face skins 3, 4 are arranged one on top of the other, and the at least one primer material is applied on the lower one of said skins, and then material (s) 14 forming the thermally insulating core 5 are arranged on the primer material. The primer material improves adhesion of the material(s) of the thermally insulating core to said at least one face skin, at least as said material(s) are still in flowable form. Following chemical reactions creating a foam, such as PIR or PUR foam, the foam gets sticky and bonds firmly even to surfaces not treated with the primer.

In an embodiment, the primer is added on the inner surface of the face skin that is intended to use as an external facing. The use of the primer may prevent delamination of the core from the face skin potentially caused by sunlight.

The open section 7 between the attachment profiles 6 is closed 206 with a strip comprising the non-combustible layer 11. In an embodiment, said layer 11 is rolled out from a rolled material coil. The non-combustible layer 11 is narrower than the distance between the first face skin 3 and the second face skin 4, or in other words, narrower than the core 5. In an embodiment, the non-combustible layer 11 is of thermal insulation material strip, such as a mineral wool strip comprising a facing layer, such as an aluminium foil. In an embodiment, the facing layer creates a sealing layer that is impermeable or at least essentially impermeable to material(s) that expand and create the thermally insulating core 5. Thus, said material(s) do(es) not leak out but stay(s) between the face skins.

The material of the thermally insulating core 5 is allowed 207 to expand into contact with the face skins 3, 4 and the non-combustible layer 11 or the sealing layer (if present) and to attach thereto.

In an embodiment of the method, a seal component 10 is arranged 208 in the attachment edge, in at least one of the two attachment profiles 6 thereof. In an embodiment, the seal component 10 is arranged in both attachment profiles 6 of the attachment edge. In an embodiment of the method, the seal component 10 is arranged in the groove-profile 9.

In an embodiment, the method is carried as a continuous process.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1: composite panel
- 2: attachment edge
- 3: first face skin
- 4: second face skin
- 5: core
- 6: attachment profile
- 7: open section
- 8: tongue-profile
- 9: groove-profile
- 10: seal component
- 11: non-combustible layer
- 12: sealing layer
- 13: metal sheet
- 14: material for thermally insulating core
- 200 - 208: method steps

## Claims

1. A fireproof sandwich-structured composite panel (1), comprising
- a first face skin (3) of sheet metal,
- a second face skin (4) of sheet metal, and
- a core (5) made of thermally insulating material arranged between the first face skin and the second face skin,
- an attachment edge (2) at the edge of the composite panel (1) for attaching the composite panel to another composite panel (1), the attachment edge (2) comprising
- two attachment profiles (6) shaped for a tongue-and-groove attachment,
- an open section (7) between the attachment profiles (6) open to the core (5), and
- a non-combustible layer (11) arranged in said open section and filling thereof, wherein
- said non-combustible layer (11) is narrower than the core (5), and
- a sealing layer (12) is arranged between the non-combustible layer (11) and the thermally insulating core (5), **characterized in that**
- the sealing layer (12) is a metal foil or sheet.

2. The composite panel as claimed in claim 1, wherein
- the open section () extends from a first of said two attachment profiles (6) to another of said two attachment profiles (6).

3. The composite panel as claimed in claim 1 or 2, wherein
- the first attachment profile (6) is formed from a sheet metal forming the first face skin (3) and the second attachment profile (6) is formed from a sheet metal forming the second face skin (4).

4. The composite panel as claimed in any of the preceding claims, wherein
- both of the two attachment profiles (6) comprise a tongue-profile (8), or
- wherein both of the two attachment profiles (6) comprise a groove-profile (9), or
- wherein one of the two attachment profiles (6) comprise a tongue-profile (8) and another of the two attachment profiles (6) comprise a groove-profile (9).

5. The composite panel as claimed in any of the preceding claims, comprising
- attachment edges (2) at opposite edges thereof, such that said attachment edges (2) are counterparts to each other.

6. The composite panel as claimed in any of the preceding claims, wherein
- the core (5) is of foamed polyurethane (PUR).

7. The composite panel as claimed in any one of the claims 1 - 5, wherein
- the core (5) is of foamed polyisocyanurate (PIR).

8. The composite panel as claimed in any of the preceding claims, wherein
- the non-combustible layer (11) comprises a layer of fibrous or porous material, such a mineral wool layer.

9. The composite panel as claimed in any of the preceding claims, wherein
- the non-combustible layer () is of mineral wool strip or stone wool strip comprising a facing layer, such as aluminum foil, said facing layer arranged to constitute said sealing layer (12).

10. The composite panel as claimed in any one of the preceding claims, comprising
- a seal component (10) arranged in at least one of the two attachment profiles (6), preferably in the groove-profile (9) .

11. The composite panel as claimed in any one of the preceding claims, being
- a façade cladding panel element, or a partition wall panel element, or a ceiling panel element.

12. A method for manufacturing a composite panel, the method comprising steps of:
- providing (200) a first face skin (3) of sheet metal and a second face skin (4) of sheet metal,
- arranging (201) the first face skin (3) and the second face skin (4) parallel,
- forming (202) an attachment profile (6) in an edge of the first face skin (3) and another attachment profile (6) in an edge of the second face skin (4), and shaping the attachment profiles (6) for a tongue-and-groove attachment, arranging (203) the attachment profiles (6) side by side so that there is an open section () between the attachment profiles (6),
- arranging (204) material(s) for a thermally insulating core (5) in a flowable form between the first face skin (3) and the second face skin (4),
- closing (205) the open section (7) between the attachment profiles (6) with a non-combustible layer (11), wherein the non-combustible layer (11) is narrower than the distance between the first face skin (3) and the second face skin (4),
- arranging between the non-combustible layer (11) and the thermally insulating core (5) a sealing layer (12), and
- allowing (206) the material of the thermally insulating core (5) to expand into contact with the first face skin (3) and the second face skin (4), **characterized by**
- the sealing layer (12) is a metal foil or sheet.

13. The method as claimed in claim 12, comprising
- applying (207) a primer material on the inner surface of at least one of the face skins (3, 4) for improving adhesion of the material of the thermally insulating core (5) to said at least one face skin (3, 4).

14. The method as claimed in claim 12 or 13, comprising
- closing (206) the open section (7) with a mineral wool or stone wool strip comprising a facing layer, and
- arranging said facing layer towards the core (5),
- creating thus a sealing layer (12).
